**Europäisches Patentamt**

**European Patent Office**

**Office européen des brevets**

(19)

(11) Veröffentlichungsnummer : **0 439 695 B1**

(12)

# EUROPÄISCHE PATENTSCHRIFT

(45) Veröffentlichungstag der Patentschrift :
**06.10.93 Patentblatt 93/40**

(51) Int. Cl.$^5$ : **C09C 1/00**

(21) Anmeldenummer : **90121041.9**

(22) Anmeldetag : **02.11.90**

(54) **Braune Einschlusspigmente und Verfahren zu ihrer Herstellung.**

(30) Priorität : **30.01.90 DE 4002564**

(43) Veröffentlichungstag der Anmeldung :
**07.08.91 Patentblatt 91/32**

(45) Bekanntmachung des Hinweises auf die
Patenterteilung :
**06.10.93 Patentblatt 93/40**

(84) Benannte Vertragsstaaten :
**AT BE CH DE DK ES FR GB IT LI NL SE**

(56) Entgegenhaltungen :
**EP-A- 0 294 664**
**DE-B- 1 222 840**
**FR-A- 731 127**
**FR-A- 1 372 981**
**FR-A- 1 432 320**

(73) Patentinhaber : **DEGUSSA AG**
**Weissfrauenstrasse 9**
**D-60311 Frankfurt (DE)**

(72) Erfinder : **Speer, Dietrich, Dr.**
**Grünaustrasse 5**
**W-6450 Hanau 9 (DE)**
Erfinder : **Kiss, Akos, Dr.**
**Odenwaldstrasse 16**
**W-8755 Alzenau-Wasserlos (DE)**
Erfinder : **Kleinschmit, Peter, Dr.**
**Wildaustrasse 19**
**W-6450 Hanau 9 (DE)**

EP 0 439 695 B1

**Beschreibung**

Die Erfindung richtet sich auf braune Einschlußpigmente auf der Basis von Zirkoniumsilikat als Hüllstubstanz und $(Fe, Mn)_2O_3$-Mischkristallen als diskret eingeschlossene farbige Verbindungen und ein Verfahren zu ihrer Herstellung.

Einschlußpigmente auf der Basis von Zirkoniumsilikat als Hüllsubstanz, in die anorganische, farbige Verbindungen als diskrete Phase eingeschlossen sind, wurden in der DE-OS 23 12 535 erstmals beschrieben. Solche Einschlußpigmente zeichnen sich durch ihre Temperatur- und Glasurstabilität aus, weshalb sie sich insbesondere zum Einfärben keramischer Materialien eignen. Als farbige, eingeschlossene Verbindungen werden Cadmiumgelb und Cadmiumrot, Thenardblau und Titangelb genannt. Bekannt ist auch das Zirkoneisen-Rosa mit $Fe_2O_3$-Einschlüssen in einer Zirkoniumsilikathülle. Ohne die schützende Hülle sind die farbgebenden Verbindungen selbst nicht oder nur unzureichend glasurstabil, d. h., sie werden vom Glasfluß aufgelöst und verlieren so ihre Pigmenteigenschaften.

Die Herstellung der $ZrSiO_4$-Einschlußpigmente erfolgt durch Glühen eines Gemisches aus Siliziumdioxid und Zirkoniumdioxid, ggf. auch $SiO_2$- und $ZrO_2$- bildenden Ausgangsprodukten, zusammen mit der einzuschließenden farbigen Substanz oder deren Ausgangsprodukten und Mineralisatoren bei 750 bis 1400 °C, meist jedoch 800 bis 1200 °C. Soweit erforderlich, schließt sich an den Glühprozeß eine Naßbehandlung an, um nicht eingeschlossene Bestandteile, sofern diese in der Anwendung stören, zu entfernen.

Es hat sich herausgestellt. daß mit dem vorstehend skizzierten Verfahren nicht alle denkbaren farbigen Verbindungen während des Bildungsprozesses der Zirkoniumsilikathülle von dieser in für Pigmentzwecke ausreichender Menge eingeschlossen werden können. Die farbgebenden Komponenten oder Ausgangsverbindungen derselben können nämlich die Bildung von $ZrSiO_4$ aus $SiO_2$ und $ZrO_2$ verzögern oder gar verhindern, oder die farbigen Verbindungen werden gar nicht umhüllt und damit die angestrebten Pigmenteigenschaften nicht erreicht.

Gemäß der deutschen Patentanmeldung P 39 06 821.8 gelangt man durch Glühen eines Eisen- und Titanverbindungen enthaltenden Gemisches unter oxidierenden Bedingungen zu beige-braunen Einschlußpigmenten mit Einschlüssen von Eisentitanat der Formel $Fe_2TiO_5$. Die Herstellung der die vorgenannten beige-braunen Einschlußpigmente erforderte den Einsatz verschiedener Zirkoniumdioxidqualitäten.

In der FR-A 1 372 981 werden graue Einschlußpigmente auf der Basis von Zirkoniumsilikat beschrieben, welche außer $Co_2O_3$, $Cr_2O_3$ und NiO auch $Fe_2O_3$ und $MnO_2$ enthalten können. Braune Einschlußpigmente werden nicht gelehrt.

Die FR-A 1 432 320 betrifft ein Verfahren zur Herstellung von Pigmenten auf der Basis von Zirkonsilikat, wobei als Chromophore $Fe_2O_3$, Oxide des Praseodyms und Mangancarbonat eingesetzt werden; als Mineralisatoren werden zwingend Bleiverbindungen eingesetzt. Die kombinierte Verwendung von Fe- und Mn-Verbindungen zur Herstellung brauner Einschlußpigmente wird nicht gelehrt.

Die Palette an optisch ansprechenden braunen $ZrSiO_4$-Einschlußpigmenten ist trotz der Eisentitanate enthaltenden Pigmente noch sehr begrenzt. Zudem ist von Interesse, hinsichtlich der $ZrO_2$-Auswahl bei der Herstellung geringeren Einschränkungen unterworfen zu sein.

Es war daher Aufgabe der vorliegenden Erfindung, braune Einschlußpigmente auf der Basis von Zirkoniumsilikat als Hüllsubstanz, in die farbige Verbindungen als diskrete Phase eingeschlossen sind, und ein Verfahren zu ihrer Herstellung zu entwickeln, um die Palette zu erweitern. Das Verfahren zur Herstellung sollte einfach durchführbar und nicht auf die Auswahl spezieller Zirkoniumdioxidqualitäten angewiesen sein, um braune Einschlußpigmente zu erhalten.

Gefunden wurden nun braune Einschlußpigmente der vorgenannten Gattung. welche dadurch gekennzeichnet sind, daß als farbige Verbindungen Mischkristalle des Typs $(Fe_{1-x} Mn_x)_2O_3$, worin x für eine Zahl im Bereich von 0,05 bis 0,20 steht, in einer Hülle aus Zirkoniumsilikat eingeschlossen sind.

In den braunen Pigmenten steht x im allgemeinen für eine Zahl im Bereich von 0,05 bis 0,20, vorzugsweise 0,10 bis 0,15. Die braunen Einschlußpigmente können bis zu etwa 5 Gew.-% der farbigen Mischoxide enthalten, im allgemeinen liegt der Gehalt aber zwischen 1 und 3 Gew.-%, bezogen auf das Einschlußpigment.

Durch die Modifizierung des $Fe_2O_3$-Kristalls, der im sogenannten Eisen-Zirkon-Rosa Korundstruktur aufweist, durch Mangan gelangt man also zu Pigmenten mit neuen Farborten. Daß diese Modifizierung zum Erfolg führte, war nicht vorhersehbar, weil $Mn_2O_3$ im Gegensatz zu $Fe_2O_3$ als alleinige farbige Verbindung praktisch nicht von einer sich bildenden Zirkoniumsilikathülle eingeschlossen wird. Wie Vergleichsversuche zeigten, wird durch Einfärbung einer Transparentglasur mit 5 Gew.-%. $Fe_2O_3$-$ZrSiO_4$-Einschlußpigmenten, hergestellt durch Glühen eines Gemisches aus $SiO_2$, $ZrO_2$, $Fe_2O_3$ und Mineralisatoren, eine orangebraune Farbe mit den Farbwerten im CIE-Lab-System (siehe Deutsche Industrie-Normen 5033, 6164 und 6174) von L etwa 39, a etwa 30 und b etwa 22 erhalten. In gleicher Weise hergestellte Pigmente, in welchen das zu glühende Gemisch anstelle des $Fe_2O_3$ die äquivalente Menge $Mn_2O_3$ enthielt, führten als 5 gew.-%ige Einfärbung in der Transpa-

EP 0 439 695 B1

rentglasur zu einer blaßgrauen, schlecht deckenden Farbe mit den Farbwerten L etwa 82, a etwa 1 und b etwa 8.

Die erfindungsgemäßen braunen Einschlußpigmente lassen sich durch 0,5- bis 8-stündiges Glühen eines Gemisches aus Zirkoniumdioxid und Siliciumdioxid oder Vorstufen von $SiO_2$ und $ZrO_2$ im Molverhältnis von im wesentlichen 1 zu 1 in Gegenwart von farbgebenden Metallverbindungen und bleifreien Mineralisatoren herstellen, indem man als farbgebende Metallverbindungen Eisen- und Manganverbindungen oder Fe und Mn enthaltende Verbindungen einsetzt, wobei das Gemisch Eisen und Mangan im Atomverhältnis von 90 : 10 bis 50 : 50 enthält, und das Gemisch bei 750 bis 1000 °C glüht.

Das zu glühende Gemisch wird vor dem Glühprozeß durch gemeinsames Vermahlen homogenisiert. Das Glühen des homogenisierten, ggf. verdichteten Gemischs kann in üblichen Öfen, wie Kammer- oder Tunnelöfen, erfolgen. Eine Aufheizrate von 200 °C pro Stunde hat sich als besonders vorteilhaft erwiesen.

Die Glühtemperatur hat einen starken Einfluß auf die erreichbare Farbe der Pigmente. Es war nicht vorhersehbar, daß bei einer Temperatur unter 1000 °C, vorzugsweise zwischen 850 und 1000 °C und insbesondere um 950 °C braune Pigmente gebildet werden; die Haltezeit bei der genannten Temperatur liegt vorzugsweise zwischen 1 und 3 Stunden, insbesondere um 2 Stunden. Durch Glühen bei einer Temperatur über 1000 °C, vorzugsweise bei 1050 bis 1200 °C und insbesondere bei etwa 1100 °C entstehen im wesentlichen graue Einschlußpigmente. Das Glühen erfolgt im allgemeinen unter atmosphärischen Bedingungen. Eine Einstellung reduzierender Bedingungen erübrigt sich.

Der zu glühende Versatz enthält Eisen und Mangan vorzugsweise im Atomverhältnis 50 : 50 bis 80 : 20, wenn braune Pigmente hergestellt werden sollen.

Als Eisenverbindungen werden Oxide bildende Fe(III)-verbindungen, insbesondere Fe(III)-oxid eingesetzt. Besonders geeignet wird $Fe_2O_3$ mit D50-Werten unter 5 um und vorzugsweise unter 1 um eingesetzt. Als Manganverbindungen können Manganoxide, wie z. B. $Mn_2O_3$ oder $MnO_2$, oder unter den Glühbedingungen Manganoxide bildende Verbindungen, wie z. B. $MnCO_3$ eingesetzt werden. Es ist auch möglich, Fe und Mn enthaltendede Verbindungen, etwa Mischoxide oder Fe und Mn enthaltende Zeolithe - hergestellt aus einem Alkali-Zeolith und einer Fe- und Mn-Ionen enthaltenden wäßrigen Lösung - vgl. DE-OS 37 19 051 - bei der Herstellung der erfindungsgemäßen Einschlußpigmente einzusetzen.

Zur Verwendung der braunen Einschlußpigmente zur Einfärbung keramischer Materialien, wie Glasuren, ist es vorteilhaft, das geglühte Reaktionsprodukt aufzumahlen und nicht eingeschlossene Metalloxide durch eine Nachbehandlung zu entfernen. Eine besonders geeignete Nachbehandlung besteht in einer Säurewäsche, vorzugsweise mit heißer Salzsäure. Ohne eine solche Nachbehandlung kann es bei der Anwendung zu Aufkocherscheinungen kommen.

Wie bereits aus dem zitierten Stand der Technik hervorgeht, bildet sich Zirkonsilikat aus $SiO_2$ und $ZrO_2$, welche im Molverhältnis von im wesentlichen 1 zu 1 eingesetzt werden; ein geringer Überschuß eines Reaktionspartners ist möglich, ein $ZrO_2$-Überschuß kann aber bei der Anwendung zur Eintrübung einer Transparentglasur führen. Anstelle $ZrO_2$ und $SiO_2$ können auch Vorstufen dieser Oxide eingesetzt werden, soweit die Oxide vor dem eigentlichen $ZrSiO_4$-Bildungsprozeß im Glühgemisch vorliegen. Beispielhaft werden Zirkonylverbindungen, etwa $ZrOCl_2$, als Vorstufe für $ZrO_2$ und Zeolithe mit einem Si/Al-Atomverhältnis von größer 2 zu 1, insbesondere größer 10 zu 1, als Vorstufe für $SiO_2$ genannt.

Die bei der Herstellung von $ZrSiO_4$-Einschlußpigmenten üblichen Mineralisatoren können auch zur Herstellung der erfindungsgemäßen Pigmente Verwendung finden.

Besonders vorteilhaft sind Alkali- und Erdalkalihalogenide, insbesondere Fluoride sowie Hexafluorosilikate.

Die Beispiele verdeutlichen die Erfindung.

Beispiel 1

Ein Versatz, bestehend aus 27,0 g Zirkoniumoxid, 10,5 g Siliziumdioxid, 3,5 g Kaliumchlorid, 2,5 g Magnesiumfluorid, 1,5 g Natriumhexafluorsilikat, 5 g Eisen(III)-oxid und 4,7 g Mangan(III)-oxid wird nach 30-minütigem Mahlen in einer Kugelmühle in einen Schamotte-Tiegel gefüllt, manuell verdichtet und dann geglüht. Aufheizrate 200 °C/h, Haltezeit 2 h bei 950 °C. Man erhält ein braunes Pigment, das nach dem Aufmahlen mit heißer konzentrierter Salzsäure ausgewaschen wird. Eine 5 %ige Einfärbung in einer blei- und boratarmen Transparentglasur ergibt die Farbwerte:

L = 40,6 , a = 12,0 , b = 13.1.

Beispiele 2 bis 7

Versätze gemäß Beispiel 1 mit den in Tabelle 1 angegebenen Eisen- und Manganverbindungen führte nach

3

Glühen und Nachbehandlung gemäß Beispiel 1 zu den in Tabelle 1 angegebenen Lab-Werten für die mit 5 % der erfindungsgemäßen Einschlußpigmente eingefärbte Transparentglasur.

### Tabelle 1

| Beispiel | Menge Fe$_2$O$_3$ (g) | Mn-Verbindung | Menge Mn-Verb. (g) | L | a | b |
|---|---|---|---|---|---|---|
| 2 | 5,0 | Mn$_2$O$_3$ | 2,4 | 45,2 | 13,8 | 16,7 |
| 3 | 5,0 | Mn$_2$O$_3$ | 1,6 | 47,2 | 14,4 | 17,6 |
| 4 | 3,0 | Mn$_2$O$_3$ | 2,8 | 42,9 | 14,0 | 15,7 |

## Patentansprüche

1. Braune Einschlußpigmente auf der Basis von Zirkoniumsilikat als Hüllsubstanz, in die farbige Verbindungen als diskrete Phase eingeschlossen sind,
   dadurch gekennzeichnet,
   daß als farbige Verbindungen Mischkristalle des Typs $(Fe_{1-x} Mn_x)_2O_3$, worin x für eine Zahl im Bereich von 0,05 bis 0,20 steht, eingeschlossen sind.

**2.** Verfahren zur Herstellung von braunen Einschlußpigmenten gemäß Anspruch 1 durch 0,5- bis 8-stündiges Glühen eines Gemisches aus Zirkoniumdioxid und Siliciumdioxid oder Vorstufen von $SiO_2$ und $ZrO_2$ im Molverhältnis von im wesentlichen 1 zu 1 in Gegenwart von farbgebenden Metallverbindungen und bleifreien Mineralisatoren,
dadurch gekennzeichnet,
daß man als farbgebende Metallverbindungen Eisen- und Manganverbindungen oder Fe und Mn- enthaltende Verbindungen einsetzt, wobei das Gemisch Eisen und Mangan im Atomverhältnis von 90 : 10 bis 50 : 50 enthält, und das Gemisch bei 750 bis 1000 °C glüht.

**3.** Verfahren nach Anspruch 2,
dadurch gekennzeichnet,
daß man feinteilige Eisen- und Manganoxide, vorzugsweise $Fe_2O_3$ und $Mn_2O_3$ oder $MnO_2$, mit D50-Werten unter 5 µm, vorzugsweise unter 1 µm, einsetzt.

**4.** Verfahren zur Herstellung von braunen Einschlußpigmenten gemäß den Ansprüchen 2 oder 3,
dadurch gekennzeichnet,
daß man bei 850 bis 1000 °C glüht und das Gemisch Eisen und Mangan im Atomverhältnis von 50 : 50 bis 80 : 20 enthält.


## Claims

**1.** Brown inclusion pigments based on zirconium silicate as enveloping substance in which coloured compounds are enclosed as a discrete phase, characterised in that the coloured compounds enclosed are mixed crystals of the type $(Fe_{1-x} Mn_x)_2O_3$ wherein x stands for a number in the range of from 0.05 to 0.20.

**2.** A process for the preparation of brown inclusion pigments according to Claim 1 by 0.5 to 8 hours' annealing of a mixture of zirconium dioxide and silicon dioxide or precursors of $SiO_2$ and $ZrO_2$ in a molar ratio of substantially 1:1 in the presence of colour producing metal compounds and lead-free mineralizers, characterised in that the colour producing metal compounds used are iron and manganese compounds or compounds containing Fe and Mn, the mixture containing iron an manganese in an atomic ratio from 90:10 to 50:50 and the mixture annealing at 750 to 1000°C.

**3.** A process according to Claim 2, characterised in that finely divided iron and manganese oxide, preferably $Fe_2O_3$ and $Mn_2O_3$ or $MnO_2$ having D50-values below 5 µm preferably, below 1 µm, are used.

**4.** A process for the preparation of brown inclusion pigments according to Claim 2 or Claim 3, characterised in that annealing is carried out at 850 to 1000°C and the mixture contains iron and manganese in an atomic ratio of from 50:50 to 80:20.


## Revendications

**1.** Pigments d'inclusion bruns à base de silicate de zirconium comme substance enveloppe dans laquelle des composés colorés sont inclus en tant que phase discontinue, caractérisés en ce que comme composés colorés, des cristaux mixtes du type $(Fe_{1-x} Mn_x)_2O_3$, dans lesquels x représente un chiffre dans la zone allant de 0,05 à 0,20, sont inclus.

**2.** Procédé d'obtention de pigments d'inclusion selon la revendication 1 par calcination pendant 0,5 à 8 heures d'un mélange de dioxyde de zirconium et de dioxyde de silicium ou des précurseurs de $SiO_2$ et de $ZrO_2$, dans un rapport molaire essentiellement de 1 pour 1, en présence de composés métalliques qui donnent de la couleur et d'agents de minéralisation dépourvus de plomb, caractérisé en ce que l'on utilise comme composés métalliques qui donnent de la couleur, des composés de fer et du manganèse, ou des composés qui contiennent du fer et du manganèse, dans lesquels le mélange renferme du fer et du manganèse dans un rapport atomique allant de 90 : 10 à 50 : 50, et que l'on calcine le mélange de 750 à 1 000° C.

**3.** Procédé selon la revendication 2, caractérisé en ce que l'on met en oeuvre des oxydes de fer et des oxydes de manganèse finement divisés, de préférence $Fe_2O_3$ et $Mn_2O_3$ ou $MnO_2$ avec des valeurs de D50 en dessous de 5 µm, de préférence en dessous de 1 µm.

4. Procédé d'obtention de pigments d'inclusion bruns selon les revendications 2 et 3, caractérisé en ce que l'on calcine de 850 à 1 000° C et que le mélange contient du fer et du manganèse dans un rapport atomique allant de 50 : 50 à 80 : 20.